# EUROPEAN PATENT APPLICATION

(11) **EP 1 568 407 A1**
(43) Date of publication of application: **31.08.2005**
(21) Application number: 04425109.8
(22) Date of filing: 24.02.2004
(51) Int. Cl.: B01D 53/84, B01D 53/14

(54) **A system for controlling volatile organic compounds and ill-smelling substances emissions**

(71) Applicant: Idrabel Italia S.r.l., Genova (IT)
(72) Inventor: Rancich, Ivo, 16011 Arenzano, Genova (IT)
(74) Representative: Mascioli, Alessandro

(57) **Abstract**

A system for controlling volatile organic compounds and ill-smelling substances emissions, comprising the use of special biologic products and the relative sprinkling apparatus of the same, with the combined and synergic action of the chemio-physical mechanism operated by the surfactants, with a nearly immediate action, and then with the enzyme-biologic activity that allows to degrade said ill-smelling substances.

The system provides the predisposition and installation of devices for the sprinkling of the products by means of air or water revolving nozzles, placed near the emission points (e.g.: gasket of the containers' roofs, foam box, exhausts, basins, etc.) and fed with a limited water quantity from the fire-fighting line, to which a special product is added by means of an adjustable dosing pipe.

## Description

The present invention concerns a system for controlling the emissions of volatile organic compounds or of ill-smelling exhalations, comprising devices for the sprinkling with revolving air or water nozzles and similar, and making use of special natural biologic products, proportioned according to the use they are programmed for.

It is known that the industries working in the petrochemical field, in the refinery or fuel storages must daily face problems bound to the emission into the atmosphere, leaks and/or accidental spilling of hydrocarbon-derived products from the plants, from the storage containers and from the devices, with a following environmental impact on the area where they are working. In most cases the conditions of the site, the atmospheric needs, economic reasons and the risk evaluation require quick and safe remedies.

A solution to these problems may come from the use of conventional technologies or, in a simpler, quicker and more economic way, by the use of new biotechnologic products in addition or in alternative to other kinds of treatment with the use of the most suitable application system.

The system according to the present invention may be used in a plurality of fields, among which:
- the reduction of ill-smelling, polluting, explosive and toxic organic vapours;
- the treatment of the emissions coming from storing containers following to the change of products, braking of gaskets or problems with the floating roof, degassing etc.;
- the treatment of refluents in plants for the treatment of process or waste waters;
- the washing of the gases before discharge into the air;
- the treatment of vapours deriving from gorging towers or plants;
- the treatment of waste like drags, dirt or similar;
- the treatment of exhalations of pharmaceutical industries, refineries, oil storage or plants for the production of oil derived products;
- the reduction of the emission of volatile organic substances produced by underground containers;
- the reduction of the emission of volatile organic substances in the field of distribution systems, like filling stations, etc.

The main advantages deriving from the system according to the present invention are the following:
- the complete and permanent elimination of bad odours;
- strong reduction of the level or gaseous emissions and of the explosion-risk level;
- strong reduction of the ambient impact deriving from phenomena of the emission of bad odours;
- improving of the working ambient;
- elimination of the problems bound to intolerance and disputes with the population living in bordering areas with the interested sites.

It is the aim of the present invention to realize a system for containing the volatile organic compounds and ill-smelling substances, fro realizing efficient, quick, economic, low risk treatments, compatible with the ambient.

The aim set forth is reached by means of the system according to the present invention, comprising the use of special biologic products and the relative application apparatus.

The formulation of said compounds is based onto the combination of surfactants, nutrients and micro-organisms making said products suitable for being used for eliminating or containing the emissions of volatile organic compounds called V.O.C., which generate odours and in some cases the risk of explosions. Furthermore, the products thus formulated also perform a removing and decomposition action of a large range of polluting substances which can be usually met in an oil or petrochemical field, among which: Hydrocarbons with carbon atom chains ranging from C-5 to C-40; benzene, xylene and toluene; Tce; Pah; Pcb and other chlorinate compounds; combustible oils; fossil fuels: gas, gas-oil, gas for the air force; leaking from pipelines; etc.

The particular feature of said products derives from the combination of the efficiency of bacteric branches appropriately selected, with the exceptional performances of special surface-active agents, and consists in the possibility of accelerating the biodegradation of the substances producing ill-smelling exhalations. The choice of natural ingredients able to complex the ill-smelling substances, and of bacteric branches for promoting an optimal enzyme activity producing the protease, lipase, amylase and cellulose enzymes, allows to degrade said ill-smelling substances, unlike what happens with the use of usually employed deodorizing products, which only cover bad odours.

The action of the product with respect to the reduction of the emissions and of the odours occurs in very quick time periods, i.e. in about a few minutes from the application, and the effect remains for a long time period. This is due to the combined and synergic action of the chemio-physic mechanism performed by the surfactants (which action is nearly immediate) and following to the biologic-enzyme action.

Furthermore, the fact that the action of these products is prolonged and continuous in time, as the micro-organisms contained therein may survive in the form of spores also in negative climatic conditions (like in periods of dryness and in strong winter temperatures) and resume life as soon as the need occurs, without the need of adding new product.

The system according to the present invention provides the preparation and the installation of devices for the sprinkling of the products by means of revolving air or water nozzles, placed near said emission points, like the gaskets of the roofs of the containers, foam boxes, basins and similar.

The sprinkling onto the gasket on the roofs is performed making use of a limited water quantity from the fire-fighting line, to which a special additive is added by means of an adjustable dosing pipe. The system provides that the connecting to the fire-fighting line is performed in the position nearest to the concerned container. Downstream of the connection point an ejector with an adjustable proportioning is installed.

The pipes are laid and fixed along the ladder leading to the upper gangway of the covering, and from there they are made come down along the ladder leading to the roof.

On the containers' roofs a ring-shaped line is laid to which sprinkling nozzles are connected near the foam box and near the gasket, with hemicyclic covering, having each ad action radius of 3 metres. Said nozzles work under the sole pressure of the liquid.

In the same way, the system for the treatment of the exhaust emissions will be installed.

The employed components (understood as apparatuses and materials) and the attention given during the installation do not determine, from the safety point of view, any risk, as risk factors have not been introduced nor are they present. Said system furthermore allows to avoid the installation of electric or air devices, of pumps or other.

## Claims

1. A system for controlling volatile organic compounds and ill-smelling substances emissions, comprising the use of special biologic products and the relative application apparatus, ***characterized in*** the combination of bacteric branches appropriately selected with the exceptional performances of surface-active agents for accelerating the biodegradation of those substances producing ill-smelling exhalations, and in the preparation and installation of devices for the sprinkling of the products by means of revolving air and water nozzles, placed near said emission points, like the gaskets on the roofs of the containers, the foam box, exhausts, basins and similar and fed with a limited water quantity of the antincendio line, to which a special product is added.

2. A system according to claim 1, ***characterized in*** the presence, on the containers' roofs, of a ring-shaped line to which, near the foam box and near the gasket, sprinkling nozzles are connected, with a hemicyclic covering having each an action beam of about 3 metres.

3. A system according to claim 1, ***characterized in*** the process according to claim 2, for the installation of the system for the treatment of the exhaust emissions.
